# EUROPÄISCHE PATENTANMELDUNG

(11) **EP 3 269 240 A1**
(43) Veröffentlichungstag der Anmeldung: **17.01.2018**
(21) Anmeldenummer: 17401072.8
(22) Anmeldetag: 05.07.2017
(51) Int. Cl.: A01M 7/00

(54) **SPRITZEINRICHTUNG UND VERFAHREN ZUM BETREIBEN EINER SPRITZEINRICHTUNG**

(30) Priorität: 12.07.2016 DE 102016112727
(71) Anmelder: Amazonen-Werke H. Dreyer GmbH & Co. KG, 49205 Hasbergen (DE)
(72) Erfinder: Kiefer, Stefan, 49074 Osnabrück (DE)

(57) **Zusammenfassung**

Die Erfindung betrifft eine Spritzeinrichtung (10) zum Versprühen von Flüssigkeiten, insbesondere für landwirtschaftliche Zwecke. Diese weist wenigstens einen Vorratstank (21) für die wenigstens Flüssigkeit und wenigstens eine Spritzdüse (15) zum Versprühen der Flüssigkeit als Spritzflüssigkeit (16) auf einer Fläche. Die Spritzflüssigkeit (16) beinhaltet wenigstens eine Trägerflüssigkeit, insbesondere Wasser, und vorzugsweise wenigstens ein Spritzmittel. Die Spritzeinrichtung (10) zeichnet sich dadurch aus, dass zur Spritzflüssigkeit (16) und/oder zur Trägerflüssigkeit eine Zudosierung wenigstens eines Zusatzstoffs (26) zu Reinigungszwecken erfolgt. Darüber hinaus wird noch ein entsprechendes Verfahren zum Betreiben einer Spritzeinrichtung (10) beschrieben.

## Beschreibung

Die Erfindung betrifft eine Spritzeinrichtung gemäß dem Oberbegriff des Anspruchs 1. Des Weiteren betrifft die Erfindung ein Verfahren zum Betreiben einer Spritzeinrichtung gemäß dem Oberbegriff des Anspruchs 10.

Spritzeinrichtungen, wie die hier beschriebenen, dienen dazu, Flüssigkeiten auf Flächen auszubringen. Im landwirtschaftlichen Bereich handelt es sich bei den Flächen um Felder oder Äcker. Dabei werden diese als sogenannte Feldspritze beispielsweise für Zwecke der Düngung, Schädlingsbekämpfung und ähnliches eingesetzt.

Derartige Spritzeinrichtungen weisen typischerweise wenigstens einen Vorratstank für die Flüssigkeit auf. Bei der Flüssigkeit kann es sich insbesondere um die zu verspritzende Spritzflüssigkeit handeln, die dazu in dem Tank bevorratet ist. Die Spritzflüssigkeit kann insbesondere aus einer Trägerflüssigkeit, wie insbesondere Wasser, und wenigstens einem Wirkstoff beziehungsweise Spritzmittel zusammengemischt sein. Das Vermischen kann je nach Ausführung der Spritzeinrichtung unter anderem direkt im Vorratstank, im Flüssigkeitskreislauf der Spritzeinrichtung oder unmittelbar an der Spritzdüse erfolgen. Die Spritzeinrichtung weist wenigstens eine Spritzdüse zum Versprühen der Flüssigkeit als Spritzflüssigkeit auf einer Fläche auf.

Eine Reinigung der Spritzeinrichtung ist regelmäßig erforderlich. Nur damit kann auf Dauer eine hohe Qualität des Spritzergebnisses, also eine möglichst positive Wirkung der Spritzflüssigkeit nach dem Ausbringen, sichergestellt werden. Insbesondere Verunreinigungen können dies negativ beeinflussen..

Zur Reinigung der Spritzeinrichtung werden typischerweise Reinigungsmittel eingesetzt. Diese werden üblicherweise mit der Trägerflüssigkeit und/oder der Spritzflüssigkeit vermischt. So kann eine Reinigung mittels eines separaten Reinigungsvorgangs erfolgen. Auch kann eine Reinigung der Spritzeinrichtung im Betrieb durch Verspritzen der noch im Vorratstank vorhandenen Spritzflüssigkeit mit wenigstens einem zugesetzten Reinigungsmittel vorgenommen werden.

Die Reinigungserfordernisse und die resultierende Reinigungswirkung hängen dabei zu einem nicht unwesentlichen Teil von der Beschaffenheit der Trägerflüssigkeit beziehungsweise der Spritzflüssigkeit ab. Das dabei als Basis üblicherweise verwendete Wasser wird typischerweise aus der öffentlichen Wasserversorgung oder auch aus eigenen Reservoiren, wie Teichen, Flüssen, Regenwasserbehältern oder auch Quellen entnommen. Dabei nutzt ein landwirtschaftlicher Betrieb in der Regel mehrere unterschiedliche Befüllstationen mit unterschiedlichen Wasserqualitäten und/oder Wassereigenschaften.

Nachteilig an den bekannten Spritzeinrichtungen beziehungsweise üblichen Reinigungsverfahren ist, dass die Reinigungserfordernisse und die Reinigungswirkung teilweise erheblich von verschiedenen Faktoren, nämlich insbesondere von der verwendeten Trägerflüssigkeit, und/oder der Spritzflüssigkeit, und/oder deren Herkunft und/oder der Vorgeschichte der Spritzeinrichtung abhängt. Dies resultiert dabei insbesondere aus unterschiedlichen beziehungsweise variierenden Eigenschaften der tatsächlich verwendeten Flüssigkeiten, insbesondere des Wassers, wie auch der verwendeten Wirkstoffe. Das Reinigungsergebnis ist also typischerweise in erheblichem Maße von der Vorgeschichte der Spritzeinrichtung und/oder den Eigenschaften von Trägerflüssigkeit und/oder Spritzflüssigkeit abhängig.

Die Aufgabe der Erfindung besteht darin, die beschriebenen Nachteile des Standes der Technik zu beseitigen. Insbesondere soll die Reinigungswirkung verbessert werden, vorzugsweise die Reinigungswirkung des wenigstens einen eingesetzten Reinigungsmittels. Dabei soll die Reinigungswirkung zukünftig unabhängiger von der Vorgeschichte der Spritzeinrichtung und den Eigenschaften von Trägerflüssigkeit und/oder Spritzflüssigkeit werden.

Eine Spritzeinrichtung mit den Merkmalen des Anspruchs 1 löst diese Aufgabe. Demnach erfolgt eine Zudosierung wenigstens eines Zusatzstoffs zur Spritzflüssigkeit. Dieser wenigstens eine Zusatzstoff dient dabei zu Reinigungszwecken und insbesondere zur Verbesserung des Reinigungsergebnisses. Der Zusatzstoff kann ein Reinigungsmittel sein oder alternativ zusätzlich zu wenigstens einem Reinigungsmittel zugegeben werden. Der Zusatzstoff weist vorzugsweise eine positive Wirkung für die Wechselwirkung der Spritzflüssigkeit und/oder Trägerflüssigkeit mit einem Reinigungsmittel auf. Dies bedeutet insbesondere, dass für das Reinigungsergebnis negative Eigenschaften der Spritzflüssigkeit beziehungsweise der Trägerflüssigkeit kompensiert werden können. Auch kann unmittelbar die Mischbarkeit des wenigstens einen Reinigungsmittels mit der Spritzflüssigkeit beziehungsweise der Trägerflüssigkeit verbessert werden. Als Zudosierung können vorzugsweise mehrere Zusatzstoffe vorgesehen sein, beispielsweise um unterschiedliche Eigenschaften von Spritzflüssigkeit und/oder Trägerflüssigkeit zu beeinflussen. Es kann sich insbesondere um flüssige oder feste, gegebenenfalls aber auch gasförmige Zusatzstoffe handeln.

Vorzugsweise erfolgt die Zudosierung automatisch oder zumindest teilweise automatisch. Dies bedeutet, dass manuelle Eingriffe reduziert oder sogar zumindest größtenteils vermieden werden können. Insbesondere kann die Zudosierung vollautomatisch durchgeführt werden. Dann ist ein Benutzereingriff nicht erforderlich. Damit wird erreicht, dass einerseits menschliche Fehler vermieden werden und andererseits die Arbeiten für den Benutzer vereinfacht werden können, indem Tätigkeiten automatisch statt manuell erledigt werden.

Die Zudosierung erfolgt insbesondere abhängig von Parametern und/oder Eigenschaften der Spritzflüssigkeit und/oder der Trägerflüssigkeit und/oder vom wenigstens einen Spritzmittel beziehungsweise Reinigungsmittel oder auch Kombinationen mehrerer Spritzmittel beziehungsweise Reinigungsmittel. Es handelt sich dabei insbesondere um vordefinierte und/oder gemessene und/oder ermittelte beziehungsweise berechnete Parameter und/oder Eigenschaften. Somit kann die Zudosierung optimiert werden. Vorzugsweise kann je nach Einsatzzweck der Spritzvorrichtung beziehungsweise je nach Anforderungen des Reinigungsvorgangs eine geeignete Datenbasis bereitgestellt und/oder geschaffen werden, insbesondere zur zumindest teilweise automatischen Steuerung beziehungsweise Regelung der Reinigungsvorgänge.

Bevorzugt erfolgt die Zudosierung abhängig von der Herkunft der Spritzflüssigkeit und/oder der Trägerflüssigkeit. Besonders bevorzugt ist sie abhängig vom Befüllort des Vorratstanks. Damit lässt sich der Einfluss unterschiedlicher Eigenschaften der Trägerflüssigkeit, gegebenenfalls unterschiedlicher Qualitäten derselben berücksichtigen. Wechselwirkungen und andere Effekte lassen sich durch geeignete Zusatzstoffe minimieren. Typischerweise bietet ein Befüllort in der Regel reproduzierbare beziehungsweise konstante Eigenschaften der als Trägerflüssigkeit verwendeten Flüssigkeit. Es handelt sich bei der Flüssigkeit insbesondere um Wasser, das dann insbesondere gleichbleibenden Härtegrad und pH-Wert aufweist. Der Befüllort kann auf unterschiedliche Weise festgestellt werden, um die Zudosierung entsprechend vorzunehmen. Insbesondere kann dies durch manuelle Eingabe erfolgen. Aber auch eine Erkennung mittels geeigneter vorzugsweise automatisiert beziehungsweise elektronisch lesbarer Markierungen ist denkbar, beispielsweise mittels optischer oder elektromagnetischer Markierungen, wie insbesondere RFID-Chips. Letztere können zum Beispiel an der Befüllstation, vorzugsweise auch am Befüllschlauch oder ähnlichem angebracht sein. Auch eine Positionsbestimmung, beispielsweise durch GPS, ist möglich. Im Vorfeld ermittelte beziehungsweise gemessene Eigenschaften der Trägerflüssigkeit können dann für die Spritzeinrichtung in geeigneter Weise hinterlegt sein. Insbesondere können die Befüllorte hinterlegt sein, vorzugsweise mit den dort vorliegenden Eigenschaften der Trägerflüssigkeit.

Die Zudosierung ist beziehungsweise erfolgt insbesondere abhängig vom aktuellen und/oder früheren Inhalt des Vorratstanks. Weiter vorzugsweise wird sie abhängig von wenigstens einem vorhergegangenen Spritzvorgang und/oder von der vorher bereits verspritzten Spritzflüssigkeit und/oder Trägerflüssigkeit und/oder vom Spritzmittel vorgenommen. Damit kann die Vorgeschichte des Vorratstanks beziehungsweise der Spritzeinrichtung bei der Zudosierung berücksichtigt werden, vorzugsweise im Hinblick auf die verwendeten Spritzflüssigkeiten und/oder Trägerflüssigkeiten. Dies ist wichtig, um störende Einflüsse, wie eventuelle Reste an Spritzflüssigkeit und/oder Ablagerungen, minimieren zu können. Zu diesem Zweck können geeignete Zudosierungen erfolgen. Statt des Befüllorts kann so alternativ oder ergänzend der Zustand beziehungsweise die Vorgeschichte der Spritzeinrichtung entsprechend berücksichtigt werden, also insbesondere erfasst und/oder gespeichert werden. Die Zudosierung eines oder mehrere Reinigungsmittel oder ergänzender Zusatzstoffe erfolgt also vorteilhafterweise in Abhängigkeit des zuvor ausgebrachten Spritzmittels und/oder der Eigenschaften der verwendeten Trägerflüssigkeit in automatisierter Weise um ein optimiertes Reinigungsergebnis zu erzielen.

Vorzugsweise erfolgt die Zudosierung mittels wenigstens einer Dosiereinheit. Gegebenenfalls können auch mehrere Dosiereinheiten vorgesehen sein. Als Dosiereinheit kann vorzugsweise wenigstens eine Dosierpumpe verwendet werden, insbesondere eine elektrische und/oder hydraulische Dosierpumpe. Alternativ können vorhandene Pumpeinrichtungen, vorzugsweise elektrische und/oder hydraulische Pumpeinrichtungen, genutzt werden, indem beispielsweise mittels wenigstens eines Ventils Leitungen für die Flüssigkeiten und/oder Zusatzstoffe umgeschaltet werden, um so eine Förderung des Zusatzstoffes zu erreichen. Vorzugsweise lassen sich auch unterschiedliche Kreisläufe für Trägerflüssigkeit einerseits und Zusatzstoffe andererseits vorsehen, um so eine Vermischung erst unmittelbar vor dem Ausbringen vorzunehmen zu können.

Für den wenigstens einen Zusatzstoff ist insbesondere wenigstens ein Vorratsbehälter oder Zusatzstoffbehälter vorgesehen. Der wenigstens eine Vorratsbehälter ist vorzugsweise austauschbar. Es kann sich beispielsweise um wiederbefüllbare Tanks, Beutel, Kanister, Kartuschen und ähnliches handeln. Damit ist eine einfache und sichere Handhabung des wenigstens einen Zusatzstoffs gewährleistet werden. Insbesondere kann ein Kontakt des Benutzers mit dem unverdünnten Zusatzstoff verhindert werden, um so Sicherheitsanforderungen zu entsprechen. Hierzu können die Vorratsbehälter als vorzugsweise hermetisch abgeschlossene Behälter ausgebildet sein. Die Vorratsbehälter können wenigstens ein Anschlussstück aufweisen, das erst durch ein korrespondierendes Anschlussstück der Spritzeinrichtung geöffnet wird. Der Inhalt des wenigstens einen Vorratsbehälters kann so zu Dosierzwecken in mehreren Teilen sukzessive entnommen werden. So können Fehldosierungen wie auch Entsorgungen von Restmengen vermieden werden. Eine einfache und sichere Handhabung wird ermöglicht, vorzugsweise ohne Kontakt des Benutzers mit dem unverdünnten Zusatzstoff.

Vorzugsweise ist wenigstens eine Steuerungseinrichtung zur Steuerung beziehungsweise Regelung der Zudosierung vorgesehen. Weiter vorzugsweise ist eine zumindest zeitweise und/oder teilweise Erfassung und/oder Speicherung von Parametern und/oder Eigenschaften bereits verspritzter Spritzflüssigkeit und/oder Trägerflüssigkeit und/oder der daraus durch Zugabe des wenigstens einen Reinigungsmittels hergestellten Reinigungsflüssigkeit durch die Steuerungseinrichtung vorgesehen. Damit können Benutzereingriffe zugunsten einer Fehlervermeidung und einer Vereinfachung der Bedienung der Spritzeinrichtung reduziert werden. Die erforderlichen Parameter und/oder Eigenschaften zur Herstellung der fertigen Reinigungsflüssigkeit, insbesondere zur Zudosierung, können bereits in der Steuerungseinrichtung hinterlegt sein und/oder ermittelt werden und/oder an diese übertragen werden, gegebenenfalls fallweise.

Wenigstens eine Messeinrichtung ist vorzugsweise zur Ermittlung von Eigenschaften der Spritzflüssigkeit und/oder der Trägerflüssigkeit beziehungsweise der hergestellten Reinigungsflüssigkeit und/oder des wenigstens einen Reinigungsmittels vorgesehen. Vorzugsweise ist eine Ermittlung des pH-Werts und/oder der Wasserhärte und/oder der Mikroorganismenlast und/oder der Mischbarkeit beziehungsweise Wechselwirkung der Bestandteile der Spritzflüssigkeit miteinander vorgesehen. Damit werden die relevanten Eigenschaften der Spritzflüssigkeit und/oder Trägerflüssigkeit verarbeitet. Der pH-Wert kann beispielsweise durch klassische Potentiometrie mittels eines pH-Meters oder neuerdings auch mittels ionensensitiver Feldeffekt-Transistoren gemessen werden. Es kann aber auch eine manuelle Ermittlung mittels pH-Teststreifen erfolgen. Entsprechende Messgeräte zur Bestimmung der Wasserhärte arbeiten typischerweise auf photometrischer Basis. Gegebenenfalls kann die Messung auch elektrophoretisch, vorzugsweise mittels Kapillarelektrophorese, oder chromatographisch, vorzugsweise durch lonenchromatographie, erfolgen. Die Wasserhärte kann außerdem in üblicher Weise manuell oder auch automatisiert durch komplexometrische Titration bestimmt werden. Gegebenenfalls lassen sich derartige Messwerte auch bei den zuständigen Wasserversorgern erfragen.

Messungen der Mikroorganismenlast, der Schwebstoffbelastung und ähnlicher makroskopischer Parameter können insbesondere auf optischem Wege erfolgen. Für die Reinigungswirkung kann insbesondere die Mischbarkeit der eingesetzten Reinigungsmittel mit der Trägerflüssigkeit beziehungsweise der Spritzflüssigkeit zur Herstellung der Reinigungsflüssigkeit entscheidend sein. Insbesondere können/kann der pH-Wert und/oder die Wasserhärte in diesem Zusammenhang von Interesse sein. Damit kann beispielsweise auch die Löslichkeit des Reinigungsmittels beeinflusst werden. Auch beispielsweise der Gehalt an Mikroorganismen beziehungsweise die Mikroorganismenlast kann Reinigungserfordernisse verstärken oder abschwächen. Durch gezielte Einstellung des pH-Werts und/oder der Wasserhärte kann das Reinigungsergebnis positiv beeinflusst werden.

Die eingangs geschilderte Aufgabe wird außerdem gelöst durch ein Verfahren zum Betreiben einer Spritzeinrichtung mit den Maßnahmen des Anspruchs 10. Die Spritzeinrichtung ist dabei insbesondere entsprechend den obigen Beschreibungen ausgebildet. Vorzugsweise wird mittels der Spritzeinrichtung eine Flüssigkeit als Spritzflüssigkeit auf einer Fläche verspritzt. Die Spritzflüssigkeit beinhaltet dabei vorzugsweise wenigstens eine Trägerflüssigkeit, insbesondere Wasser, und vorzugsweise wenigstens ein Spitzmittel. Das Verfahren zeichnet sich erfindungsgemäß gerade dadurch aus, dass zur Spritzflüssigkeit und/oder zur Trägerflüssigkeit wenigstens ein Zusatzstoff zu Reinigungszwecken zudosiert wird. Der wenigstens eine Zusatzstoff kann vorzugsweise zusätzlich zu wenigstens einem Reinigungsmittel verwendet werden. Er dient vorzugsweise dazu, wenigstens eine Eigenschaft der Spritzflüssigkeit und/oder der Trägerflüssigkeit zu beeinflussen. Damit wird insbesondere erfindungsgemäß darauf abgezielt, Wechselwirkungen und/oder Effekten durch Eigenschaften der Spritzflüssigkeit und/oder der Trägerflüssigkeit und/oder des wenigstens einen Wirkstoffs entgegen zu wirken.

Das Verfahren geht bevorzugt davon aus, dass der wenigstens eine Zusatzstoff automatisch zudosiert wird. Damit können manuelle Eingriffe reduziert werden, insbesondere um Fehlbedienungen zu vermeiden und/oder den Benutzer zu entlasten. Vorzugsweise wird die Steuerung und/oder Regelung der Zudosierung durch wenigstens eine Steuerungseinrichtung durchführt. Damit erfolgt eine Verlagerung in maschinelle Verantwortung.

Bevorzugt wird die Zudosierung anhand von Parametern und/oder Eigenschaften der Spritzflüssigkeit und/oder der Trägerflüssigkeit und/oder des Spritzmittels beziehungsweise der Vorgeschichte der Spritzeinrichtung vorgenommen. Die Parameter werden vorzugsweise vordefiniert und/oder gemessen und/oder ermittelt beziehungsweise berechnet. Vorzugsweise handelt es sich um den pH-Wert und/oder die Wasserhärte und/oder die Mikroorganismenlast und/oder die Mischbarkeit beziehungsweise Wechselwirkung der Bestandteile der Spritzflüssigkeit miteinander. Damit lassen sich zumindest einzelne der erfahrungsgemäß entscheidenden Parameter berücksichtigen, um das Reinigungsergebnis optimieren zu können.

Der wenigstens eine Zusatzstoff beeinflusst vorzugsweise die Eigenschaften der Spritzflüssigkeit und/oder der Trägerflüssigkeit entsprechend der Zudosierung, insbesondere als Verbesserung. Es handelt sich hierbei vorzugsweise um den pH-Wert und/oder die Wasserhärte und/oder die Mikroorganismenlast und/oder die Mischbarkeit beziehungsweise Wechselwirkung der Bestandteile der Spritzflüssigkeit miteinander oder die Mischbarkeit des oder der Reinigungsmittel mit der Trägerflüssigkeit. Damit erfolgt eine Einflussnahme auf die Spritzflüssigkeit und/oder die Trägerflüssigkeit, um so das Reinigungsergebnis zu verbessern. Es wird also insbesondere Einfluss auf eventuelle Wechselwirkungen und/oder Effekte zwischen Trägerflüssigkeit und/oder Reinigungsmittel genommen.

Bevorzugt wird der wenigstens eine Zusatzstoff aus wenigstens einem Vorratsbehälter beziehungsweise Zusatzstoffbehälter zudosiert. Der wenigstens eine Vorratsbehälter kann vorzugsweise ausgetauscht werden. Es kann sich beispielsweise um wiederbefüllbare Tanks, Beutel, Kanister, Kartuschen und ähnliches handeln. Damit ist eine einfache und sichere Handhabung des wenigstens einen Zusatzstoffs gewährleistet werden. Insbesondere kann ein Kontakt des Benutzers mit dem unverdünnten Zusatzstoff verhindert werden, um so Sicherheitsanforderungen zu entsprechen. Hierzu können die Vorratsbehälter als vorzugsweise hermetisch abgeschlossene Behälter ausgebildet sein. Die Vorratsbehälter können wenigstens ein Anschlussstück aufweisen, das erst durch ein korrespondierendes Anschlussstück der Spritzeinrichtung geöffnet wird. Der Inhalt des wenigstens einen Vorratsbehälters kann so zu Dosierzwecken in mehreren Teilen sukzessive entnommen werden. So können Fehldosierungen wie auch Entsorgungen von Restmengen vermieden werden. Eine einfache und sichere Handhabung wird ermöglicht, vorzugsweise ohne Kontakt des Benutzers mit dem unverdünnten Zusatzstoff.

Als Zusatzstoffe zur Absenkung oder Neutralisierung des pH-Wertes eignen sich zum Beispiel Säuren oder Salze, wie insbesondere Zitronensäure, schwefelsaures Ammoniak, oder ähnliches, aber auch spezielle Additive und Wirkstoffe, die einen Einfluss auf den pH-Wert haben. Zur Erhöhung des pH-Werts können darüber hinaus unter anderem Laugen, wie beispielsweise Natriumhydroxit (NaOH), oder auch Bor-haltige Stoffe, wie insbesondere Natriumborat, verwendet werden. Der Härtegrad kann durch geeignete Stoffe angepasst werden. Hier können insbesondere primär zur Reduzierung des Kalk- beziehungsweise Magnesiumgehalts entsprechende "Gegenspieler" eingesetzt werden, wie beispielsweise schwefelsaurer Ammoniak, organische Säuren oder spezielle Additive beziehungsweise Enthärter. Bei zu hohem Eisen- und/oder Mangangehalt kann üblicherweise eine Wasseraufbereitung erfolgen.

Eine derartige Reinigung kann auf verschiedene Weise durchgeführt werden. Üblicherweise wird einem Teil, insbesondere einem ausreichenden Rest der Spritzflüssigkeit wenigstens ein Reinigungsmittel zugesetzt. Diese Spritzflüssigkeit wird dann üblicherweise auf der landwirtschaftlichen Fläche ausgebracht, zumindest auf einem Teil derselben. Somit kann die Reinigung sogar im laufenden Spritzbetrieb erfolgen. Statt der Spritzflüssigkeit kann aber auch nur die Trägerflüssigkeit ohne Wirkstoffe mit dem Reinigungsmittel versehen werden. Auch diese kann dann auf der der landwirtschaftlichen Fläche ausgebracht oder auf andere Weise entsorgt werden. So kann insbesondere ein separater Reinigungsvorgang unabhängig vom Spritzvorgang durchgeführt werden. Um die Reinigungswirkung zu verbessern, werden entsprechend wie oben beschrieben die Zusatzstoffe verwendet. Alternativ werden auf die Eigenschaften der Trägerflüssigkeit und/oder die jeweils zuvor verwendeten Spritzmittel abgestimmte Reinigungsmittel und/oder Reinigungsmittelmengen vorzugsweise automatisiert zudosiert. In jedem Fall kann die Spritzeinrichtung 10 auf diese Weise durchgespült werden, um möglichst sämtliche Komponenten, wie insbesondere Leitungen, Pumpen, Düsen und Behälter, von darin befindlichen oder auch anhaftenden Verunreinigungen zur befreien.

Bevorzugte Ausführungsbeispiele der Erfindung werden im Folgenden anhand der Zeichnungen beschrieben. In diesen zeigen:
- Fig. 1: eine perspektivische Ansicht einer Feldspritze als erfindungsgemäßer Spritzeinrichtung angehängt an einem Zugfahrzeug,
- Fig. 2: einen Flüssigkeitslaufplan einer erfindungsgemäßen Spritzeinrichtung mit direkter Einspeisung als erstem Ausführungsbeispiel, und
- Fig. 3: einen Flüssigkeitslaufplan einer erfindungsgemäßen Spritzeinrichtung mit druckseitiger Einspeisung als zweitem Ausführungsbeispiel.

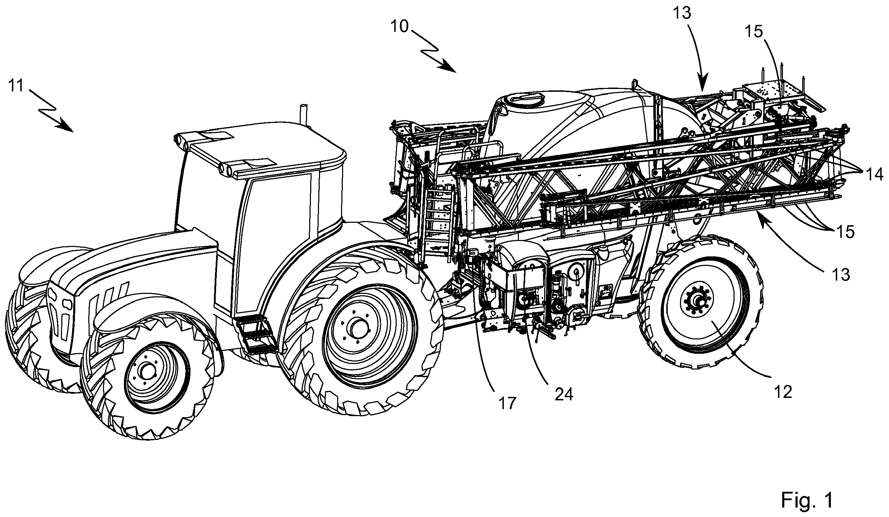

Die Figuren zeigen unterschiedliche Ausführungen einer Spritzeinrichtung 10. Bei der in Fig. 1 dargestellten Spritzeinrichtung 10 handelt es sich um eine sogenannte Feldspritze. Diese dient im landwirtschaftlichen Bereich zum Ausbringen von Flüssigkeiten auf einer landwirtschaftlichen Fläche, wie einem Acker, einem Feld oder ähnlichem. Die Spritzeinrichtung 10 weist einen Flüssigkeitskreislauf 22 auf. Die Darstellung des Flüssigkeitskreislaufs 22 beschränkt sich hier der Übersicht halber auf die wesentlichen Bestandteile.

Die gezeigte Spritzeinrichtung 10 ist als sogenannte angehängte Feldspritze an ein Zugfahrzeug 11 angehängt. Dementsprechend weist die Spritzeinrichtung 10 zwei Räder 12 zum Abstützen und Verfahren auf einem Untergrund auf, insbesondere auf einer landwirtschaftlichen Fläche.

Die Spritzeinrichtung 10 weist in üblicher Weise einen Ausleger 13 auf, der sich zu beiden Seiten der Spritzeinrichtung 10 seitlich erstreckt. Der Ausleger 13 ist aus mehreren Segmenten 14 gebildet, die gelenkig miteinander verbunden sind. Somit ist der Ausleger 13 faltbar ausgebildet. Im gezeigten Ausführungsbeispiel der Fig. 1 ist der Ausleger 13 im Fahrbetrieb der Spritzeinrichtung 10 zusammengefaltet. Im Spritzbetrieb wird der Ausleger 13 seitlich typischerweise zu seiner maximalen Erstreckung ausgeklappt, kann aber je nach Anwendung auch teilweise eingeklappt bleiben oder werden.

Am Ausleger 13 sind in regelmäßigen Abständen verteilt Spritzdüsen 15 angeordnet. Diese dienen dazu, eine Spritzflüssigkeit 16 auf einer Fläche zu verspritzen. Hierzu ist wenigstens eine Spritzmittelpumpe 17 vorgesehen. Wenigstens ein Ventil 18 ist zum Schalten der Abgabe von Spritzflüssigkeit 16 mittels der Spritzdüsen 15 vorgesehen, indem die Zufuhr an Spritzflüssigkeit 16 damit aktiviert oder deaktiviert wird. Um ein selektives Schalten einzelner oder mehrerer Spritzdüsen 15 zu ermöglichen, sind aber typischerweise mehrere Ventile 18 vorgesehen.

Die Spritzflüssigkeit 16 ist in der Regel mit wenigstens einem Wirkstoff versetzt. Hierbei kann es sich beispielsweise um ein Düngemittel, ein Pflanzenschutzmittel oder ähnliches handeln. Auch können gleichzeitig mehrere Wirkstoffe in der Spritzflüssigkeit 16 vorgesehen sein. Mit der Spritzflüssigkeit 16 wird dann die entsprechende Fläche behandelt. Die Wirkstoffe werden üblicherweise in Form eines oder mehrerer Spritzmittel bereitgestellt. Dabei können auch mehrere Wirkstoffe zusammen in einem Spritzmittel kombiniert sein.

Um hinreichende Mengen der Spritzflüssigkeit 16 bereitstellen zu können, wird üblicherweise eine Trägerflüssigkeit, wie insbesondere Wasser, mit einem Wirkstoff oder mehreren Wirkstoffen in Form eines Spritzmittels oder mehrerer Spritzmittel versetzt.

Dies kann direkt in einem Vorratstank 21 erfolgen. Dann dient der Vorratstank 21 zunächst zur Aufnahme der Trägerflüssigkeit. Der Vorratstank 21 wird dazu an einer Befüllstation mit der Trägerflüssigkeit befüllt. Erst durch Zugabe des wenigstens einen Wirkstoffs beziehungsweise Spritzmittels wird diese dann zur eigentlichen Spritzflüssigkeit 16. Diese Art der Wirkstoffeinspeisung wird auch als druckseitige Einspeisung bezeichnet, da eine Zugabe durch Einpumpen in den Vorratstank 21, beispielsweise über Einsprühdüsen 23, erfolgt.

Um hinreichende Mengen des wenigstens einen Wirkstoffs beziehungsweise Spritzmittels zugeben zu können, ist in den gezeigten Ausführungsbeispielen exemplarisch ein Einspülbehälter 24 gezeigt. Gegebenenfalls können auch mehrere Wirkstoffbehälter beziehungsweise Einspülbehälter 24 vorgesehen sein. Der oder die Einspülbehälter 24 können über hier nicht gezeigte Ventile in den Flüssigkeitskreislauf 22 eingebunden sein, oder auch über separate Pumpeinrichtungen verfügen. Grundsätzlich kann die Zugabe des wenigstens einen Wirkstoffs des wenigstens einen Spritzmittels aber auch direkt in den Vorratstank 21 erfolgen, insbesondere automatisch oder auch manuell. Ein fakultativer Klarwassertank 25 dient darüber zur Versorgung der Spritzeinrichtung 10 mit Klarwasser 34 zum Einspülen, zum Verdünnen oder auch zu Reinigungszwecken. Mittels einer Ringleitung kann gegebenenfalls für eine kontinuierliche Zuleitung der Spritzflüssigkeit 16 zu den Spritzdüsen 15 gesorgt werden.

Alternativ kann auch ein Vermischen der Trägerflüssigkeit mit dem Wirkstoff oder den Wirkstoffen des wenigstens einen Spritzmittels erst nach Entnahme der Trägerflüssigkeit aus dem Vorratstank 21 im Flüssigkeitskreislauf 22 der Spritzeinrichtung 10 vorgesehen sein. Dann ist eine entsprechende hierfür geeignete Mischeinrichtung im Flüssigkeitskreislauf 22 vorzusehen. Eine solche Mischeinrichtung sorgt für eine Vermischung der Wirkstoffe 26 mit der Trägerflüssigkeit zur Spritzflüssigkeit 16. Auch kann eine solche Vermischung in einer alternativen Ausführung gegebenenfalls erst unmittelbar im Bereich der Spritzdüsen 15 erfolgen.

Als Trägerflüssigkeit zur Aufnahme des Wirkstoffs oder der Wirkstoffe beziehungsweise des Spritzmittels ist typischerweise Wasser vorgesehen. Wasser ist abhängig von dessen Herkunft unterschiedlich gut zum Einsatz als Spritzflüssigkeit unter Zugabe von Wirkstoffen geeignet. Beispielsweise spielen Faktoren, wie der pH-Wert oder die Wasserhärte, eine große Rolle bei der Wirksamkeit einzelner Wirkstoffe des Spritzmittels ebenso wie bezüglich der Reinigungswirkung von Reinigungsmitteln. Gerade auch das Zusammenspiel mehrerer Reinigungsmittel kann dadurch deutlich beeinflusst werden. Bei der üblichen Entnahme der Trägerflüssigkeit abwechselnd aus unterschiedlichen Quellen, wie beispielweise Teichen, Regenwassertanks oder der öffentlichen Wasserversorgung, ergeben sich immer unterschiedliche Eigenschaften der Trägerflüssigkeit. Diese sind insbesondere bei Reinigungsvorgängen zu berücksichtigen.

Eine Reinigung der Spritzeinrichtung 10 ist in regelmäßigen Abständen erforderlich, um die Spritzeinrichtung in einem funktionsfähigen Zustand zu erhalten. Außerdem kann damit ein möglichst optimales Spritzergebnis erreicht werden, also eine hohe Qualität bei der Ausbringung von Spritzmitteln. Dabei kann eine Reinigung im laufenden Betrieb durch Zugabe zur Spritzflüssigkeit 16 oder auch in einem separaten Reinigungsvorgang zur Trägerflüssigkeit erfolgen. Ein Ausbringen auf einer landwirtschaftlichen Fläche oder auch eine anderweitige Entsorgung sind so möglich.

Wenigstens ein hier nicht dargestelltes Reinigungsmittel kann dazu in üblicher Weise über den Einspülbehälter 24 der Flüssigkeit im Vorratstank 21 zugegeben werden. Damit kann wie beschrieben eine Vermischung mit der Spritzflüssigkeit 16 beziehungsweise der Trägerflüssigkeit mit oder ohne weitere Wirkstoffe erfolgen. Die mit dem Reinigungsmittel versetzte Flüssigkeit kann dann im Flüssigkeitskreislauf 22 umgepumpt werden, um alle Bereich zu reinigen. Sie kann dann entsorgt werden oder auch auf einer Fläche ausgebracht werden, gegebenenfalls zusammen mit den in der Spritzflüssigkeit 16 enthaltenen Wirkstoffen. Gleichzeitig kann dann während des Spritzvorgangs auch eine Reinigung vorgenommen werden.

In der Regel gibt es Bereiche für die einzelnen Eigenschaften der Trägerflüssigkeit, die für ein optimales Reinigungsergebnis der Spritzeinrichtung 10 einzuhalten sind. Typischerweise kann der pH-Wert optimal zwischen 5 und 7 eingestellt werden. Der optimale pH-Wert ist jedoch auch abhängig vom jeweiligen Reinigungsmittel beziehungsweise der jeweiligen Reinigungsmittelkombination.

Dementsprechend soll die erfindungsgemäße Spritzeinrichtung 10 dafür sorgen, dass Unterschiede in den Eigenschaften der Trägerflüssigkeit beziehungsweise Abweichungen vom Optimum möglichst ausgeglichen werden. Dies erfolgt durch Zudosierung von Zusatzstoffen 26 oder eine in Abhängigkeit der Eigenschaften der Trägerflüssigkeit vorgenommene insbesondere automatische Wahl des Reinigungsmittels und/oder der Reinigungsmittelmenge. Insgesamt soll so ein verbessertes Reinigungsergebnis beziehungsweise eine bessere Mischbarkeit und/oder Wechselwirkung erhalten werden. Eine derartige Zudosierung kann grundsätzlich unabhängig davon erfolgen, ob die Trägerflüssigkeit im Vorratstank 21 mit dem wenigstens einen Reinigungsmittel und/oder den Wirkstoffen beziehungsweise Spritzmitteln zur Spritzflüssigkeit 16 vermischt wird oder erst danach im Flüssigkeitskreislauf 22.

Auch die Zugabe des Reinigungsmittels kann davon unabhängig vorgenommen werden. Beispielsweise kann diese Zugabe auch mittels der Zudosierung erfolgen. Das Reinigungsmittel kann so in einer speziellen Ausführungsform als ein Zusatzstoff 26 betrachtet und zugegeben werden. Im vorliegenden Fall wird eine Zudosierung zweier Zusatzstoffe 26 gezeigt. Wenigstens eines kann in dem oben genannten, speziellen Fall ein Reinigungsmittel sein. Allgemein handelt es sich aber um die beschriebenen Zusatzstoffe 26 zur Beeinflussung der Wassereigenschaften.

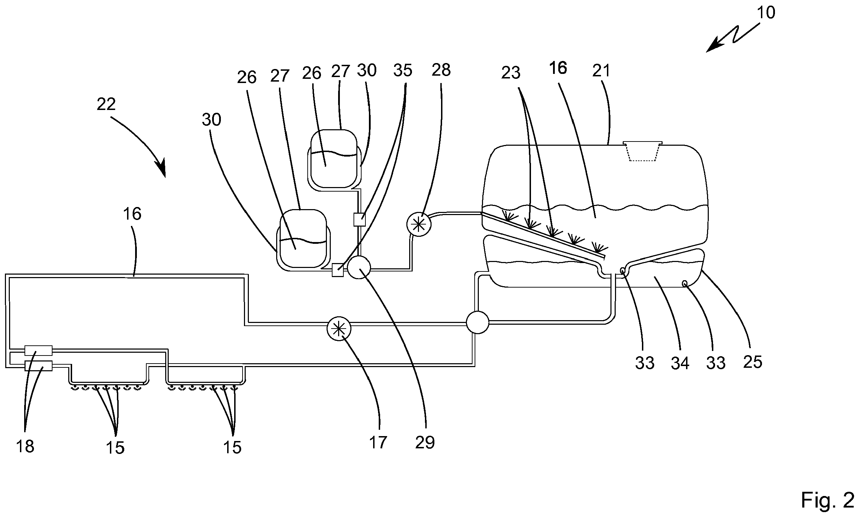

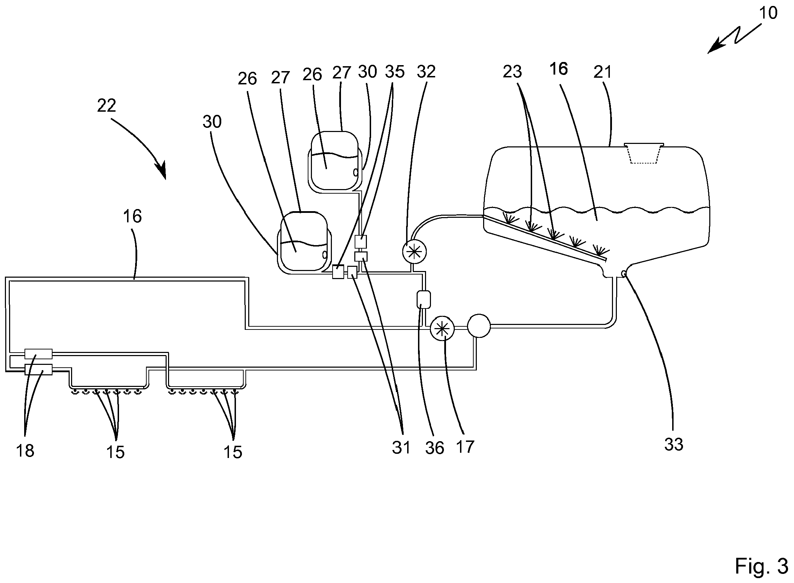

Die Zusatzstoffe 26 werden hier in jeweils einem separaten Zusatzstoffbehälter 27 gelagert. Aus diesem Zusatzstoffbehälter 27 als Vorratsbehälter kann die Spritzeinrichtung 10 entsprechende Mengen des jeweiligen Zusatzstoffes 26 entnehmen. Hierzu kann insbesondere eine einzige zentrale Dosierpumpe 28 vorgesehen sein, gegebenenfalls auch je eine Dosierpumpe 28 je Zusatzstoff 26. Diese Dosierpumpe 28 kann beispielsweise wie in Fig. 2 die Zusatzstoffe 26 aus den jeweiligen Behältern 27 ansaugen und in den Vorratstank 21 einspritzen. Alternativ kann die Dosierpumpe 28 beispielsweise auch wie in Fig. 3 gezeigt ist ausgebildet sein und als Pumpe 32 sowohl die Zusatzstoffe 26 also auch Spritzflüssigkeit 16 fördern, um ein passendes Mischungsverhältnis zum genaueren Dosieren herstellen zu können.

Die Fig. 2 zeigt exemplarisch eine direkte Einspritzung der Zusatzstoffe 26 in den Vorratstank 21. Aus Kostengründen können aber statt einer separaten Ausbildung der Komponenten eher bereits vorhandene Mittel genutzt werden, also insbesondere ein vorhandenes Mischventil 25 und/oder vorhandene Einsprühdüsen 23 für Wirkstoffe.

Ein Aufbau ähnlich zu Fig. 3 kann bevorzugt verwendet werden. Gegebenenfalls kann statt der in der Fig. 3 gezeigten druckseitigen Einspeisung auch eine saugseitige Einspeisung im Abgang vom Vorratstank 21 aus vorgesehen sein.

Die Wirkstoffe 26 und/oder das wenigstens eine Reinigungsmittel können auch aus einem separaten Einspülbehälter 24 in den Vorratstank 21 eingespült werden. Hierzu wird der wenigstens eine Wirkstoff 26 und/oder das wenigstens eine Reinigungsmittel in den Einspülbehälter 24 gegeben. Das Einspülen erfolgt dann vorzugsweise mittels Klarwasser 34 aus einem Klarwassertank 25.

Ein Mischventil 29 dient im gezeigten Fall exemplarisch zur Vermischung der beiden Zusatzstoffe 26. Es kann jedoch auch entfallen. Auch können geeignete Ventile bei einem druck- oder saugseitigen Anschluss an den Flüssigkeitskreislauf 22 vorgesehen sein. In diesem Fall könnte der Zusatzstoff 26 auch durch den vorhandenen Druck im Kreislauf 22 entnommen werden.

Angedeutet ist dabei auch, dass es sich hier um herausnehmbare Zusatzstoffbehälter 27 handelt. Diese sind dazu in einer Behälteraufnahme 30 an der Spritzeinrichtung 10 eingesetzt. Diese Behälteraufnahme 30 dient dabei zur Halterung eines Zusatzstoffbehälters 27 und zur Regelung der Entnahme der Zusatzstoffe 26, indem Vorkehrungen für eine entsprechende Entnahme getroffen werden, beispielsweise in Form korrespondierender Anschlussstücke an Behälteraufnahme 30 und Zusatzstoffbehälter 27 oder ähnlichem.

Gegebenenfalls können die Zusatzstoffbehälter 27 auch mit elektronisch lesbaren Markierungen versehen sein, wie beispielsweise RFID, um die eingesetzten Behälter 27 identifizieren zu können. Die Zudosierung kann sowohl bei elektronischer Erkennung wie auch bei manueller Eingabe aufgrund der Zusatzstoffe 26 im Behälter 27 vorgenommen werden.

Die Zudosierung von Zusatzstoffen 26 kann aufgrund voreingestellter Parameter erfolgen. Beispielsweise kann sie abhängig von der Herkunft der Trägerflüssigkeit, also dem entsprechenden Befüllort, vorgenommen werden. Dazu ist die Position der Befüllung zu ermitteln. Dies kann beispielsweise durch manuelle Eingabe erfolgen, aber auch durch Positionsbestimmung mittels elektronischer Hilfsmittel, wie RFID (Radio Frequency Identification Device), GPS (Global Positioning System), elektronischer Kartendaten und ähnlichem.

Die Parameter und Eigenschaften der Trägerflüssigkeit und/oder der Spritzflüssigkeit lassen sich im Vorhinein in geeigneter Weise hinterlegen, insbesondere in einer hier nicht gezeigten Steuerungseinrichtung. Da die Abfolge der Spritzvorgänge für die Reinigungsvorgänge entscheidend sein kann, kann eine Speicherung dieser Abfolge und damit der Vorgeschichte der Spritzeinrichtung 10 erfolgen. Damit kann dann die Zudosierung der Zusatzstoffe 29 basierend auf den vordefinierten Daten vorgenommen werden. Die Steuerungseinrichtung nimmt die entsprechende Zudosierung basierend auf den vorliegenden Daten vor.

In der Ausführung der Erfindung gemäß Fig. 2 sind außerdem Messeinrichtungen 33 zur Ermittlung einzelner relevanter Parameter von Trägerflüssigkeit, Wirkstoff beziehungsweise Spritzflüssigkeit 16 und/oder gegebenenfalkls auch des Reinigungsmittels vorgesehen. Die hier gezeigten Positionen im Flüssigkeitskreislauf 22 sind lediglich exemplarisch zu sehen. Die Messeinrichtungen 33 können beispielsweise zur Ermittlung des pH-Werts beziehungsweise der Wasserhärte ausgebildet sein. Somit kann eine Messung der für den Spritzvorgang beziehungsweise Reinigungsvorgang wichtigen Parameter und Eigenschaften der eingesetzten Flüssigkeiten und Stoffe erfolgen.

Um eine korrekte Dosierung der Zusatzstoffe 26 sicherzustellen zu können, werden vorzugsweise Durchflussmessgeräte 35 in den entsprechenden Leitungen vorgesehen. Hier ist exemplarisch je ein Durchflussmessgerät 35 für jeden der Zusatzstoffbehälter 27 vorgesehen.

Ein Rückschlagventil 36 dient außerdem dazu, einen Rückfluss der Spritzflüssigkeit in den Bereich der Zusatzstoffdosierung zu verhindern. Außerdem kann damit eine Zudosierung allein durch den Saugdruck der Pumpe 17 ermöglicht werden. Dazu sind die Dosierventile 31 lediglich entsprechend zu öffnen.

Als Zusatzstoffe 26 können insbesondere saure und basische Stoffe, wie auch Puffer zur Regulierung beziehungsweise Einstellung des pH-Werts dienen. Entsprechende Stoffe werden insbesondere zur Regulierung der Wasserhärte eingesetzt. Zur Abtötung von Mikroorganismen lassen sich ebenfalls gegebenenfalls geeignete Mittel einsetzen.

Das erfindungsgemäße Verfahren läuft insbesondere wie folgt ab:
Eine Zudosierung eines Zusatzstoffes 26 zur Spritzflüssigkeit 16 beziehungsweise zur Trägerflüssigkeit dient dazu, das Reinigungsergebnis beziehungsweise die Reinigungswirkung zu verbessern. Eigenschaften und Parameter sowohl der Trägerflüssigkeit als auch der Spritzflüssigkeit können vom optimalen Bereich abweichen. Mittels Zusatzstoffen 26 sollen diese wieder weiter in Richtung Optimum bewegt werden.

Zur Steuerung der eigentlichen Zudosierung dient eine geeignete Steuerungseinrichtung. Aber auch die erforderlichen Datenerfassungen, Speicherungen und Berechnungen werden üblicherweise von dieser erledigt. Dabei kann auch auf externe Speicher oder Systeme zugegriffen werden, beispielsweise zur Beschaffung spezieller Berechnungsvorschriften, Wirkstoffeigenschaften oder anderer Daten.

Es erfolgt eine Zudosierung abhängig vom aktuellen Zustand und/oder dem vorherigen Zustand beziehungsweise den vorherigen Zuständen der Trägerflüssigkeit beziehungsweise der Spritzflüssigkeit 16. Die relevanten Parameter und/oder Eigenschaften, wie pH-Wert und/oder Wasserhärte, können aus vorherigen Messungen bereits vorliegen und gespeichert sein oder auch gemessen werden. Dazu wird insbesondere wenigstens eine Messeinrichtung 33 eingesetzt.

Um die Eigenschaften der Trägerflüssigkeit an einem konkreten Befüllort abzurufen, kann auch eine Positionsbestimmung erfolgen, beispielsweise per GPS oder auch manuell. Die Daten der aufgefüllten Trägerflüssigkeit ergeben sich vorzugsweise dann direkt aus dem Speicher der Steuerungseinrichtung.

Nun kann durch geeignete Zugabe von Zusatzstoffen 26 zur Trägerflüssigkeit beziehungsweise Spritzflüssigkeit 16 den Abweichungen vom Optimum entgegengewirkt werden. Bei einem zu niedrigen pH-Wert kann daher insbesondere eine Base zugegeben werden, bei einem zu hohen eine Säure. So kann das Reinigungsergebnis positiv beeinflusst werden.

Die hier beschriebenen Ausführungsbeispiele und Varianten der Erfindung und deren Teilaspekte sind grundsätzlich miteinander kombinierbar. Somit lassen sich einzelne Merkmale unterschiedlicher gezeigter beziehungsweise beschriebener Ausführungen beziehungsweise Varianten miteinander in Verbindung bringen.

### Bezugszeichenliste

- 10: Spritzeinrichtung
- 11: Zugfahrzeug
- 12: Rad
- 13: Ausleger
- 14: Segment
- 15: Spritzdüsen
- 16: Spritzflüssigkeit
- 17: Spritzmittelpumpe
- 18: Ventil
- 21: Vorratstank
- 22: Flüssigkeitskreislauf
- 23: Einsprühdüse
- 24: Einspülbehälter
- 25: Klarwassertank
- 26: Zusatzstoff
- 27: Zusatzstoffbehälter
- 28: Dosierpumpe
- 29: Mischventil
- 30: Behälteraufnahme
- 31: Dosierventil
- 32: Pumpe
- 33: Messeinrichtung
- 34: Klarwasser
- 35: Durchflussmessgerät
- 36: Rückschlagventil

## Patentansprüche

1. Spritzeinrichtung zum Versprühen von Flüssigkeiten, insbesondere für landwirtschaftliche Zwecke, mit wenigstens einem Vorratstank (21) für die wenigstens eine Flüssigkeit und mit wenigstens einer Spritzdüse (15) zum Versprühen der Flüssigkeit als Spritzflüssigkeit (16) auf einer Fläche, wobei die Spritzflüssigkeit (16) wenigstens eine Trägerflüssigkeit, insbesondere Wasser, und vorzugsweise wenigstens ein Spritzmittel beinhaltet, **dadurch gekennzeichnet, dass** zur Spritzflüssigkeit (16) und/oder zur Trägerflüssigkeit eine Zudosierung wenigstens eines Zusatzstoffs (26) zu Reinigungszwecken erfolgt.

2. Spritzeinrichtung nach Anspruch 1, **dadurch gekennzeichnet, dass** die Zudosierung automatisch erfolgt.

3. Spritzeinrichtung nach Anspruch 1 oder 2, **dadurch gekennzeichnet, dass** die Zudosierung abhängig von Parametern und/oder Eigenschaften der Spritzflüssigkeit (16) und/oder der Trägerflüssigkeit und/oder vom wenigstens einen Spritzmittel beziehungsweise Wirkstoff erfolgt, wobei es sich insbesondere um vordefinierte und/oder gemessene und/oder ermittelte beziehungsweise berechnete Parameter und/oder Eigenschaften handelt.

4. Spritzeinrichtung nach einem der vorhergehenden Ansprüche, **dadurch gekennzeichnet, dass** die Zudosierung abhängig von der Herkunft der Spritzflüssigkeit (16) und/oder der Trägerflüssigkeit (erfolgt, vorzugsweise abhängig vom Befüllort des Vorratstanks (21).

5. Spritzeinrichtung nach einem der vorhergehenden Ansprüche, **dadurch gekennzeichnet, dass** die Zudosierung abhängig vom aktuellen und/oder früheren Inhalt des Vorratstanks (21) erfolgt, vorzugsweise abhängig von wenigstens einem vorhergegangenen Spritzvorgang und/oder von der vorher bereits verspritzten Spritzflüssigkeit (16) und/oder Trägerflüssigkeit und/oder vom Spritzmittel.

6. Spritzeinrichtung nach einem der vorhergehenden Ansprüche, **dadurch gekennzeichnet, dass** die Zudosierung mittels wenigstens einer Dosiereinheit erfolgt, vorzugsweise wenigstens einer Dosierpumpe (28).

7. Spritzeinrichtung nach einem der vorhergehenden Ansprüche, **dadurch gekennzeichnet, dass** für den wenigstens einen Zusatzstoff (19) **wenigstens** ein Zusatzstoffbehälter (27) als Vorratsbehälter vorgesehen ist, wobei der wenigstens eine Vorratsbehälter vorzugsweise austauschbar ist.

8. Spritzeinrichtung nach einem der vorhergehenden Ansprüche, **dadurch gekennzeichnet, dass** eine Steuerungseinrichtung zur Steuerung beziehungsweise Regelung der Zudosierung vorgesehen ist, wobei vorzugsweise eine zumindest zeitweise und/oder teilweise Erfassung und/oder Speicherung von Parametern und/oder Eigenschaften bereits verspritzter Spritzflüssigkeit (16) und/oder Trägerflüssigkeit durch die Steuerungseinrichtung vorgesehen ist.

9. Spritzeinrichtung nach einem der vorhergehenden Ansprüche, **dadurch gekennzeichnet, dass** wenigstens eine Messeinrichtung (33) zur Ermittlung von Eigenschaften der Spritzflüssigkeit (16) und/oder der Trägerflüssigkeit und/oder des wenigstens einen Spritzmittels vorgesehen ist, wobei vorzugsweise eine Ermittlung des pH-Werts und/oder der Wasserhärte und/oder der Mikroorganismenlast und/oder der Mischbarkeit beziehungsweise Wechselwirkung der Bestandteile der Spritzflüssigkeit (16) miteinander und/oder der Mischbarkeit zumindest eines Reinigungsmittels mit der Trägerflüssigkeit vorgesehen ist.

10. Verfahren zum Betreiben einer Spritzeinrichtung, insbesondere nach einem der vorhergehenden Ansprüche, wobei wenigstens eine Flüssigkeit als Spritzflüssigkeit (16) mittels der Spritzeinrichtung (10) auf einer Fläche verspritzt wird, wobei die Spritzflüssigkeit (16) wenigstens eine Trägerflüssigkeit, insbesondere Wasser, und vorzugsweise wenigstens ein Spritzmittel beinhaltet, **dadurch gekennzeichnet, dass** zur Spritzflüssigkeit (16) und/oder zur Trägerflüssigkeit wenigstens ein Zusatzstoff (26) zu Reinigungszwecken der Spritzeinrichtung (10) zudosiert wird.

11. Verfahren nach Anspruch 10, **dadurch gekennzeichnet, dass** der wenigstens eine Zusatzstoff (26) automatisch zudosiert wird, wobei vorzugsweise wenigstens eine Steuerungseinrichtung die Steuerung und/oder Regelung der Zudosierung durchführt.

12. Verfahren nach Anspruch 10 oder 11, **dadurch gekennzeichnet, dass** die Zudosierung anhand von Parametern und/oder Eigenschaften der Spritzflüssigkeit (16) und/oder der Trägerflüssigkeit und/oder des Spritzmittels vorgenommen wird, wobei die Parameter vorzugsweise vordefiniert und/oder gemessen und/oder ermittelt beziehungsweise berechnet werden, vorzugsweise der pH-Wert und/oder die Wasserhärte und/oder die Mikroorganismenlast der Spritzflüssigkeit (16) miteinander.

13. Verfahren nach einem der Ansprüche 10 bis 12, **dadurch gekennzeichnet, dass** der wenigstens eine Zusatzstoff (26) die Reinigungseigenschaften der Spritzflüssigkeit (16) und/oder der Trägerflüssigkeit entsprechend der Zudosierung beeinflusst, insbesondere verbessert.

14. Verfahren nach einem der Ansprüche 10 bis 13, **dadurch gekennzeichnet, dass** der wenigstens eine Zusatzstoff (26) aus wenigstens einem Zusatzstoffbehälter (27) als Vorratsbehälter zudosiert wird, wobei vorzugsweise der wenigstens eine Vorratsbehälter ausgetauscht werden kann.
